## Europäisches Patentamt
## European Patent Office
## Office européen des brevets

(19)

(11) Numéro de publication: **0 250 327 B1**

(12)

# FASCICULE DE BREVET EUROPEEN

(45) Date de publication du fascicule du brevet:
20.06.90

(51) Int. Cl.⁵: **B01D 67/00, G21F 9/06**

(21) Numéro de dépôt: 87401375.8

(22) Date de dépôt: 18.06.87

(54) Elément d'ultrafiltration, d'hyperfiltration ou de déminéralisation, son procédé de fabrication et son utilisation pour le traitement d'effluents liquides radioactifs.

(30) Priorité: 20.06.86 FR 8608947

(43) Date de publication de la demande:
23.12.87 Bulletin 87/52

(45) Mention de la délivrance du brevet:
20.06.90 Bulletin 90/25

(84) Etats contractants désignés:
BE DE GB

(56) Documents cités:
EP-A- 0 139 806
DE-A- 2 052 236
DE-A- 3 342 823
FR-A- 425 563
FR-A- 2 478 482
GB-A- 1 197 572
US-A- 3 657 402
US-A- 4 346 126

PATENT ABSTRACTS OF JAPAN,
vol.9, no. 74 (C-273)[1797], 3 avril 1985; &
JP-A-59 206 008 (TDK K.K.) 21-11-1984

(73) Titulaire: COMMISSARIAT A L'ENERGIE ATOMIQUE,
31/33, rue de la Fédération, F-75015 Paris(FR)

(72) Inventeur: Bardot, Colette, 88, rue Racine,
F-69100 Villeurbanne(FR)
Inventeur: Bergez, Pierre, 32, rue Dareau,
F-75014 Paris(FR)
Inventeur: Eyraud, Charles, 34, rue Joliot Curie,
F-69004 Lyon(FR)
Inventeur: Ilahiane, Lahcen, Laboratoire de Chimie
Appliquée B.P. 6010, F-69604 Villeurbanne(FR)

(74) Mandataire: Mongrédien, André et al, c/o
BREVATOME 25, rue de Ponthieu, F-75008 Paris(FR)

## Description

L'invention a pour objet la réalisation d'éléments d'ultrafiltration, d'hyperfiltration ou de déminéralisation présentant simultanément de bonnes propriétés mécaniques, notamment une bonne rigidité et une bonne tenue à la pression, et de bonnes propriétés physicochimiques, notamment une perméabilité élevée, des pores de faibles dimensions, avec une distribution resserrée autour de la valeur moyenne et éventuellement un caractère ionique prononcé.

Jusqu'à présent des éléments de ce type ont été réalisés soit à partir de matériaux inorganiques, soit à partir de matériaux organiques.

Lorsqu'on utilise des matériaux inorganiques, on peut fabriquer des éléments présentant de bonnes propriétés mécaniques et des propriétés physicochimiques intéressantes en ce qui concerne la perméabilité, les dimensions des pores et leur distribution, en déposant sur un support minéral macroporeux une couche minérale microporeuse qui peut être obtenue par exemple à partir d'un gel peptisé comme il est décrit dans le brevet français FR-A-2 550 953 déposé le 12/4/1977 au nom du Commissariat à l'Energie Atomique.

Grâce aux propriétés du support macroporeux, ces éléments présentent une bonne rigidité et une bonne tenue à la pression, et la réalisation de la couche microporeuse à partir d'un gel peptisé permet d'obtenir la répartition et les dimensions de pores souhaitées ainsi qu'une perméabilité élevée. Cependant, de tels éléments ne peuvent présenter un caractère ionique prononcé.

Lorsqu'on utilise des matériaux organiques, la pratique habituelle est de fabriquer des membranes en polymère organique, par exemple par coulée à partir d'une solution du polymère dans un solvant approprié, suivie d'une évaporation du solvant. Les polymères utilisés sont en particulier les esters cellulosiques, et l'on peut obtenir à partir de ceux-ci des membranes semiperméables convenant à la déminéralisation des eaux salées telles que l'eau de mer, comme il est décrit dans le brevet américain US-A-3 133 132 déposé le 29/11/1960 au nom de S. Loeb et al.

Ces membranes organiques présentent des propriétés physico-chimiques très intéressantes pour les séparations par ultrafiltration ou déminéralisation, notamment en raison du fait qu'on peut les fonctionnaliser en introduisant dans le polymère des groupes anioniques ou cationiques, ce qui est avantageux lorsqu'on les utilise pour la déminéralisation de solutions salines peu concentrées et l'ultrafiltration de colloïdes. Cependant, ces membranes organiques ont l'inconvénient d'être fragiles mécaniquement et de nécessiter en conséquence l'utilisation de structures de renforcement et de support. On peut par exemple utiliser des supports tissés ou non tissés en polymère compatible avec le polymère organique constituant la membrane. On peut aussi les disposer sur des supports métalliques tubulaires perforés. Cependant, ceci nécessite des opérations de montage supplémentaires des membranes, ce qui nuit au coût des installations. On peut encore les réaliser dans l'épaisseur totale d'un support poreux par imprégnation du support par une solution, suivie d'une évaporation du solvant, comme il est décrit dans les brevets EP-A-139 806, DE-A-2 052 236, FR-A-425 563 et GB-A-1 197 572.

Ainsi, les membranes formées dans le support poreux ont une épaisseur au moins égale à celle du support poreux et l'on ne peut obtenir dans ces conditions une perméabilité élevée.

On a aussi envisagé de réaliser des filtres comprenant un support poreux en céramique sur lequel on dispose une membrane microporeuse semi-perméable en polymère organique, en effectuant un bouchage des pores lors de la mise en place de la membrane organique et en dissolvant ensuite le matériau qui bouche les pores après mise en place de la membrane organique, comme il est décrit dans le brevet japonais 59/206008 déposé au nom de TDK CORP. le 10/05/83 sous le N°081562.

Cependant, ce mode de fabrication ne permet pas d'obtenir des résultats satisfaisants.

En effet, la couche active a une cohésion imparfaite avec le support et elle est de ce fait fragile. En raison de sa faible épaisseur et de sa disposition en surface, elle présente une fragilité importante aux rayures et aux impacts ainsi qu'à l'effort tangentiel du flux des fluides à traiter.

Par ailleurs, il existe certaines difficultés techniques pour trouver des agents de bouchage qui puissent être dissous en fin d'opération sans léser la couche active de polymère organique.

La présente invention a précisément pour objet un élément d'ultrafiltration, d'hyperfiltration ou de déminéralisation, qui pallie les inconvénients rappelés ci-dessus.

L'élément d'ultrafiltration, d'hyperfiltration ou de déminéralisation selon l'invention comprend un support poreux en matériau inorganique et une membrane microporeuse en polymère organique, asymétrique, cloisonnée, réalisée sur l'une des faces du support poreux et imbriquée dans les pores du support poreux affleurant cette surface, sans dépasser la surface du support poreux, cette membrane ayant une épaisseur inférieure à celle du support poreux.

De préférence, les rayons des pores de la membrane microporeuse en polymère organique sont situés dans la gamme allant de 1,5 à 100 nm.

La structure des éléments d'ultrafiltration, d'hyperfiltration ou de déminéralisation de l'invention est particulièrement intéressante. En effet, ces éléments sont naturellement supportés par le support macroporeux en matériau inorganique ils ont de ce fait une bonne résistance à la pression, ainsi que de bonnes propriétés mécaniques, et leur manipulation et leur montage dans une installation sont rendus plus faciles.

Par ailleurs, le fait que la membrane microporeuse en polymère organique soit cloisonnée et imbriquée dans les pores du support poreux permet d'obtenir un élément robuste, non fragile, ne présentant pas les inconvénients des filtres produits selon le brevet japonais 59/206008 de TDK CORP., tout en disposant d'une couche d'ultrafiltration discontinue et asymétrique à grande perméabilité.

De plus, le cloisonnement et la compartimentation de la couche de polymère dans les pores du support permet d'éviter les difficultés que l'on rencontre habituellement pour la mise en oeuvre de membranes organiques planes, en particulier les fissurations. On obtient ainsi un meilleur ancrage de la couche dans le support et de meilleures propriétés mécaniques.

L'épaisseur de la couche de polymère tapissant les pores du support minéral peut aller de 25 micromètres à 200 micromètres et la partie supérieure de la couche peut être située en retrait de la surface du support macroporeux jusqu'à une distance de l'ordre de 10 µm qui correspond sensiblement au diamètre maximum des grains de surface du support. Le support macroporeux peut avoir une épaisseur de 1,5 à 5 mm.

Cette épaisseur faible de la membrane microporeuse, et son caractère asymétrique, c'est-à-dire ses dimensions de pores qui sont plus petites sur la surface qu'à l'intérieur du support poreux, permettent d'obtenir des éléments ayant une perméabilité élevée à l'eau.

Ces éléments peuvent être fabriqués par des procédés faciles à mettre en oeuvre qui permettent par ailleurs de choisir les caractéristiques de porosité et de perméabilité de la membrane microporeuse dans une gamme étendue.

Les supports macroporeux en matériau inorganique peuvent être réalisés en métal ou en alliage métallique, par exemple en nickel ou en alliage de nickel, en acier inoxydable ou en tout alliage insensible à la corrosion dans le milieu utilisé, en carbone poreux, ou encore en matériau céramique tel qu'un oxyde, un carbure, un nitrure ou un siliciure, par exemple en alumine ou en carbure de silicium.

De préférence, pour obtenir un bon accrochage de la membrane microporeuse dans les pores du support macroporeux, on utilise un support poreux dont la ou les surfaces destinées à recevoir la membrane microporeuse comprennent une couche mince d'apprêt dont les pores ont un rayon moyen de pore inférieur au rayon moyen de pore du reste du support poreux.

A titre d'exemple, la couche mince d'apprêt peut présenter un rayon moyen de pore de 0,01 à 10 µm.

Le support poreux peut avoir n'importe quelle forme. Ainsi, on peut utiliser des supports poreux plans, des supports poreux tubulaires ou encore des supports poreux ayant la forme de modules percés de canaux. Ils peuvent être par ailleurs munis de nervures, par exemple de nervures hélicoïdales, pour promouvoir la turbulence du fluide à traiter au niveau de l'élément.

Lorsqu'on utilise un support poreux tubulaire, la membrane microporeuse en polymère organique est généralement réalisée sur la surface interne du support tubulaire.

Lorsqu'on utilise un support poreux ayant la forme d'un module percé de canaux longitudinaux, la membrane microporeuse en polymère organique est généralement réalisée sur la surface interne des canaux.

L'emploi de tels modules est particulièrement intéressant car les modules peuvent être assemblés facilement pour constituer une installation d'ultrafiltration comportant un nombre élevé de canaux de passage du fluide à traiter.

Les membranes en polymère organique disposées sur ce support poreux peuvent être réalisées en différents polymères organiques, qui sont choisis en fonction de l'utilisation de l'élément.

Généralement, on utilise des polymères susceptibles d'être mis sous la forme de membrane par les procédés classiques de coulée d'une solution suivie de l'évaporation du solvant, par exemple des polymères tels que les polysulfones, les polyamides, les esters cellulosiques, les éthers cellulosiques et les ionomères présentant un caractère ionique prononcé.

On utilise en particulier des polymères qui ont été modifiés de façon à comprendre des groupes cationiques et/ou anioniques, par exemple des polymères sulfonés ou quaternisés tels que les polysulfones sulfonées.

L'utilisation de tels polymères donne à la membrane obtenue la possibilité d'effectuer des séparations, d'une part, par effet de tamis (rétention de solides, de macromolécules et de colloïdes) et, d'autre part, par effet "Donnan" (rétention de solutés ioniques en raison du caractère ionique de la membrane). Ceci est particulièrement intéressant pour certaines applications telles que la déminéralisation de l'eau.

L'invention a également pour objet un procédé de fabrication d'un élément d'ultrafiltration, d'hyperfiltration et/ou de déminéralisation répondant aux caractéristiques précitées.

Ce procédé consiste à :

a) - enduire l'une des surfaces d'un support poreux en matériau inorganique d'une solution d'enduction constituée par une solution du polymère organique dans au moins un solvant, et

b) insolubiliser le polymère organique de la solution d'enduction en effectuant les étapes successives suivantes :

1) - évaporation partielle du ou des solvant(s) de la solution d'enduction,
2) - coagulation du polymère par immersion du support enduit dans un bain de coagulation ne dissolvant pas le polymère tout en étant miscible avec le ou les solvant(s) de la solution d'enduction, et

3

3) - traitement thermique de l'ensemble dans un liquide ne dissolvant ni le polymère, ni le support poreux.

Ce procédé de fabrication de la membrane microporeuse par inversion de phase présente de nombreux avantages car il est facile à mettre en œuvre et permet de régler les caractéristiques de porosité et de perméabilité de la couche microporeuse. Ceci peut être effectué en choisissant de façon appropriée la composition de la solution d'enduction, la durée d'évaporation, la composition et la température du bain de coagulation ainsi que la durée, la température et le liquide utilisés pour le traitement thermique. En effet, en jouant sur la teneur en polymère de la solution d'enduction, sur l'adjonction d'additifs ne dissolvant pas le polymère et sur les proportions relatives entre les solvants et les additifs, on peut couvrir une gamme étendue de rayons de pores et de perméabilité. De plus, ce mode de préparation permet d'obtenir une membrane asymétrique, et la présence du support poreux au moment des opérations successives d'évaporation et de coagulation qui habituellement soumettent le polymère organique à des contraintes considérables, permet d'éviter les risques de fissuration de la membrane microporeuse en raison du cloisonnement de celle-ci à l'intérieur des pores du support poreux, contrairement à ce qui se produit lorsqu'on réalise une membrane plane homogène ou une membrane disposée sur la surface d'un support céramique selon le procédé du brevet japonais 59/206 008.

Les solvants utilisés pour préparer la solution d'enduction sont généralement des solvants organiques auxquels on ajoute éventuellement de l'eau. A titre d'exemples de solvants organiques susceptibles d'être utilisés avec les polysulfones sulfonées, on peut citer les formamides comme le diméthylformamide, des mélanges de dioxane et de tétrahydrofuranne le diméthylsulfoxyde et le bioxyde de tétrahydrothiofène (sulfolane®).

On peut ajouter à la solution d'enduction des additifs ne dissolvant pas le polymère mais jouant le rôle d'agent producteur de pores, par exemple un perchlorate dans le cas de réalisation de membranes en ester cellulosique. On peut aussi ajouter à la solution d'enduction des additifs tels que l'eau, les alcools pour régler la viscosité à des valeurs appropriées, situées généralement dans la gamme allant de 70 à 700 m · Pa.s, soit de 7 à 70 Pa.s.

L'enduction du support peut être réalisée par une méthode permettant l'étalement de la solution d'enduction à une vitesse constante choisie en fonction de la viscosité de la solution, par exemple à une vitesse de 1,6 à 10 cm.s$^{-1}$ pour des viscosités allant de 7 à 70 Pa.s.

Lorsque le support est un support poreux tubulaire et que l'on veut disposer la membrane en polymère organique sur la surface interne du support tubulaire, on peut utiliser en particulier un dispositif comportant deux rondelles en caoutchouc que l'on dispose à l'intérieur du support poreux en interposant entre celles-ci la solution d'enduction, l'étanchéité étant assurée au moyen d'une au moins de ces rondelles. En déplaçant le support poreux le long des rondelles en caoutchouc à une vitesse appropriée, on réalise ainsi l'enduction de la surface interne du support poreux.

On peut aussi réaliser l'enduction d'une manière analogue avec un dispositif ne comportant qu'une seule rondelle en caoutchouc que l'on dispose l'extrémité inférieure du support poreux tubulaire. Dans ce cas, on introduit la solution d'enduction au-dessus de la rondelle en caoutchouc et on déplace vers le haut la rondelle en caoutchouc au moyen d'une tige mobile.

Après cette opération d'enduction, selon le mode préféré de mise en oeuvre du procédé de l'invention, on évapore partiellement le ou les solvants de la solution d'enduction. Ceci peut être réalisé à la température ambiante pendant des durées allant de 1 à 600 s, qui sont choisies en fonction de la dimension de pore que l'on veut obtenir. En effet, plus la durée du séchage augmente, plus le rayon de pore diminue. Généralement, des durées de 90 à 360 s sont utilisées pour obtenir des rayons de pores convenant à la déminéralisation de l'eau.

Après évaporation partielle du solvant, on soumet le support enduit au traitement d'insolubilisation. Ce traitement consiste en une immersion du support enduit dans un bain de coagulation choisi de façon à ne dissoudre ni le polymère, ni le support poreux, tout en étant miscible avec le ou les solvants présents dans la solution d'enduction. A titre d'exemple, on peut utiliser, comme bain de coagulation une solution aqueuse de nitrate de sodium, et opérer à des températures inférieures à la température ambiante, par exemple à une température de 0 à 20°C.

Après cette opération d'insolubilisation, on soumet l'ensemble à un traitement thermique réalisé dans un liquide ne dissolvant ni le polymère, ni le support poreux.

A titre d'exemple, on peut utiliser comme liquide de l'eau pure et opérer à une température de 50 à 95°C pendant des durées allant de 10 min. à 3 heures.

D'autres caractéristiques et avantages de l'invention apparaîtront mieux à la lecture des exemples suivants, donnés bien entendu à titre illustratif et non limitatif, en référence au dessin annexé sur lequel :

- la figure 1 représente de façon schématique un dispositif d'enduction d'un support poreux tubulaire,
- la figure 2 représente de façon schématique un autre dispositif d'enduction d'un support poreux tubulaire,
- la figure 3 représente schématiquement la réalisation successive des étapes d'enduction et de coagulation,

- la figure 4 représente schématiquement la structure de l'élément obtenu selon l'invention, et
- la figure 5 représente schématiquement la structure de l'élément obtenu selon le brevet japonais 59/206 008.

Les exemples qui suivent, illustrent tous la réalisation de filtres sur support poreux tubulaires en alumine à l'intérieur desquels sont réalisées des membranes en polysulfone sulfonée cationique provenant de la société Imperial Chemical Industries et ayant un taux de sulfonation correspondant à un motif sulfoné sur dix.

Les supports poreux tubulaires en alumine ont une longueur de 54 cm, un diamètre interne de 1,5 cm et un diamètre externe de 1,9 cm, et ils sont sous la forme de supports composites, c'est-à-dire de supports constitués par des tubes poreux ayant un rayon moyen de pore de 7,5 à 10 μm, dont la surface interne est revêtue d'une couche d'alumine ayant une épaisseur de 2 à 30 μm et un rayon moyen de pore de 0,5 à 1 μm.

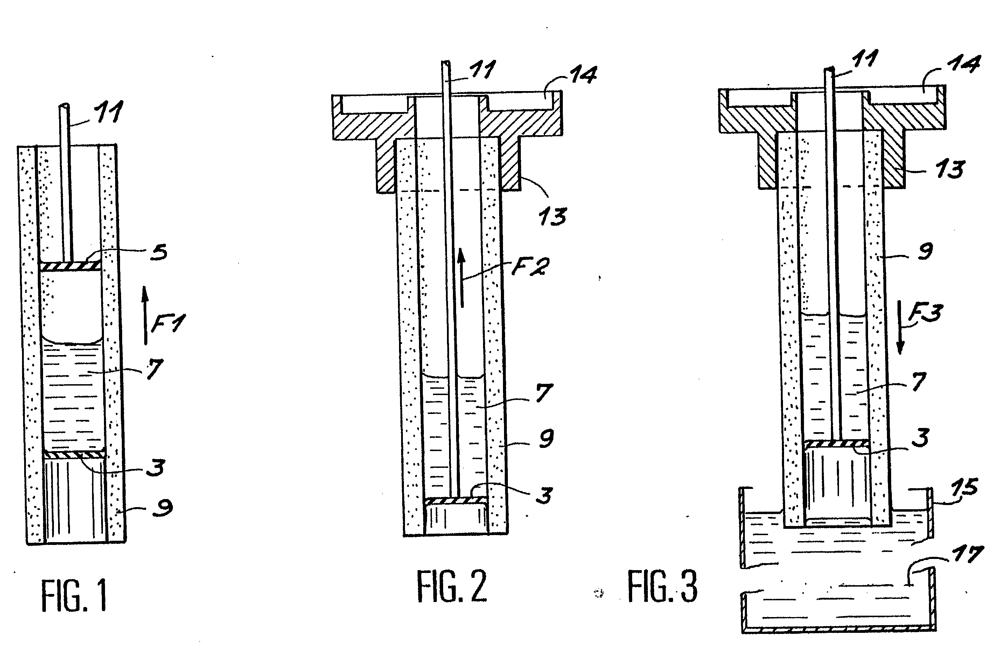

Pour réaliser les éléments d'ultrafiltration conformes à l'invention, on prépare tout d'abord une solution d'enduction à partir de la polysulfone sulfonée, de diméthylformamide, de Sulfolane® (bioxyde de tétrahydrothiofène), et éventuellement d'eau, et on réalise ensuite l'enduction du support poreux en alumine en utilisant le dispositif des figures 1, 2 ou 3.

Sur la figure 1, on voit que le dispositif comprend deux rondelles en caoutchouc 3 et 5 entre lesquelles est disposée la solution d'enduction 7 à l'intérieur du support tubulaire 9. Les rondelles de caoutchouc 3 et 5 ont des diamètres légèrement supérieurs au diamètre interne du support tubulaire 9 et elles sont fixées sur une tige filetée et fixe 11 au moyen d'écrous non représentés sur le dessin. Ces rondelles sont constituées par des feuilles de caoutchouc de 1 mm d'épaisseur ayant un diamètre de 16 mm. Dans ce mode de réalisation, on déplace le support tubulaire 9 de bas en haut (flèche F₁), la rondelle inférieure 3 assure l'étanchéité alors que la rondelle supérieure 5 permet d'enlever l'excédent de solution d'enduction à la surface du support, et ces rondelles sont suffisamment souples, élastiques et déformables pour être utilisées avec un support nervuré.

Sur la figure 2, on a représenté un autre dispositif d'enduction et on a utilisé les mêmes références pour désigner les composants communs aux deux systèmes. Dans ce cas, le support poreux tubulaire 9 est fixe et il est monté sur un système de montage supérieur 13 comportant un réservoir 14 de récupération de la solution d'enduction excédentaire. Le dispositif ne comprend qu'une seule rondelle de caoutchouc 3 identique à celle utilisée sur la figure 1 et une tige 11 qui est mobile et peut se déplacer vers le haut dans le sens de la flèche F₂. Dans ce cas, la rondelle 3 assure simultanément l'étanchéité et l'élimination de l'excès de solution d'enduction déposé sur le support poreux 9. En fin d'opération, on recueille dans le réservoir 14 la solution d'enduction en excès.

Sur la figure 3, on a représenté un dispositif analogue à celui de la figure 2, la différence étant que, dans ce cas, la tige 11 est fixe, alors que l'ensemble support poreux 9 et système de montage 13 peuvent se déplacer vers le bas dans le sens de la flèche F₃. Ainsi, on peut procéder à la coagulation dans le bain 17 avec un temps de séchage rigoureusement constant sur toute la longueur du filtre.

Lors de l'opération d'enduction du support poreux 9, la solution pénètre à l'intérieur des couches superficielles de grains d'alumine par capillarité et la profondeur de pénétration dépend de la vitesse de déplacement du support poreux 9 ou de la tige 11 ainsi que de la viscosité de la solution d'enduction. Cette profondeur de pénétration peut varier dans les exemples cités de 100 à 200 μm.

Après cette opération, on réalise l'évaporation partielle du ou des solvants, à la température ambiante, pendant une durée t₁ qui peut varier de 90 à 360 s.

On insolubilise ensuite la polysulfone sulfonée par immersion du support enduit dans un bain de coagulation constitué par une solution aqueuse de nitrate de sodium contenant 125 g/l de $NaNO_3$ à une température d'environ 4°C, et on réalise ensuite le traitement thermique par immersion de l'élément dans de l'eau pure à 80°C, pendant une heure.

Après cette opération, les caractéristiques de rugosité de surface du support sont les mêmes que celles de la couche d'alumine superficielle d'origine.

Sur la figure 3, on a représenté la réalisation en continu des étapes d'enduction, d'évaporation et d'insolubilisation de la polysulfone sulfonée. Dans ce cas, la rondelle de caoutchouc 3 est montée sur une tige fixe 11 et l'ensemble constitué par le support poreux 9 monté sur le système 13 peut se déplacer dans le sens de la flèche F₃. Ainsi, le support est introduit après enduction dans un récipient 15 rempli du bain de coagulation 17. De la sorte, en réglant de façon appropriée la vitesse de déplacement du support poreux 9 et la distance initiale entre le support poreux et le bain de coagulation 17, on peut réaliser l'enduction et la coagulation du polymère en continu avec un temps de séchage rigoureusement constant entre ces deux opérations.

On répète ces opérations en utilisant différentes solutions d'enduction et différents temps de séchage et l'on détermine après traitement thermique la perméabilité à l'eau pure et le rayon moyen de pore des éléments obtenus. Le rayon moyen de pore est déterminé par ultrafiltration de solutions de dextran. La masse moléculaire M étant reliée au rayon de Stokes Einstein par l'expression :

$$r_s = 0,33(M)^{0,463}$$

on peut définir $r_{50}$ et $r_{90}$ : rayons correspondant à des taux de rejet de 50% et 90%, dont le rapport permet d'évaluer la dispersion de la distribution des rayons de pore.

Les résultats obtenus pour différentes solutions d'enduction et différents temps de séchage sont donnés dans le tableau 1 joint.

Au vu des résultats donnés dans le tableau 1, on constate que :
- la perméabilité à l'eau diminue lorsque la durée d'évaporation augmente et qu'il en est de même du rayon moyen de pore (voir exemples 1 à 3),
- la perméabilité et la dispersion des rayons de pores définie par le rapport $r_{90}/r_{50}$ diminuent lorsqu'on ajoute de l'eau à la solution d'enduction (voir exemples 4 à 6),
- cet ajout d'eau dans la solution d'enduction est particulièrement décisif sur l'homogénéité de la texture du filtre puisque le procédé permet à partir d'une solution peu concentrée d'atteindre une dispersion de rayon de pores comparable à celle des solutions plus concentrées et ceci avec une perméabilité supérieure (comparaison entre l'exemple 6 et les exemples 1, 2, 3 et 7), et
- la perméabilité et le rayon moyen de pores dépendent fortement des teneurs en polysulfone sulfonée de la solution d'enduction (voir exemples 1 à 4).

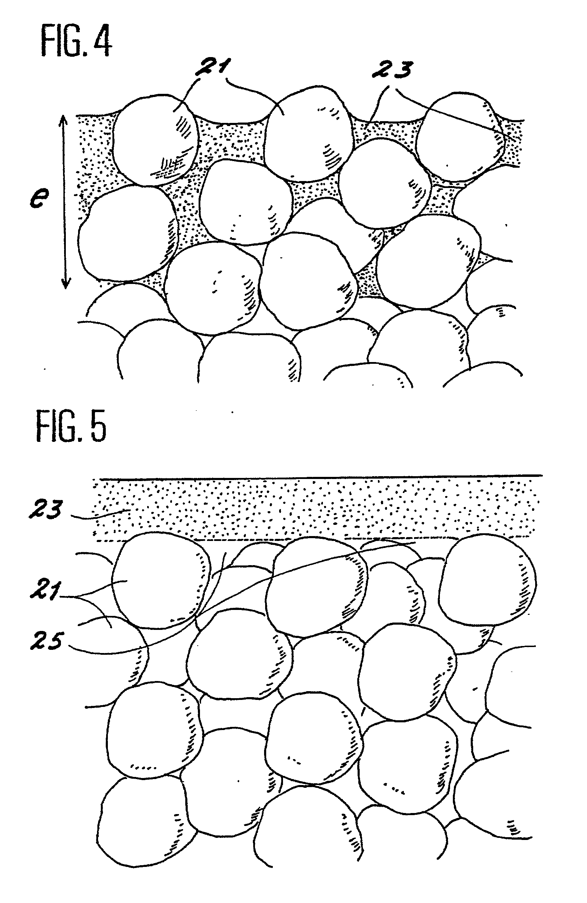

Sur la figure 4, on a représenté de façon schématique la structure de l'élément obtenu selon le procédé de l'invention. Sur cette figure, on voit que l'élément comporte un support poreux ayant sur sa surface des grains d'alumine 21 qui délimitent entre eux des pores ayant un rayon moyen de 0,5 à 1 µm. Entre les grains 21 de cette couche superficielle du support, la membrane microporeuse cloisonnée en polymère organique 23 est disposée à la surface du support en étant imbriquée dans les pores qui affleurent cette surface sans dépasser pour autant cette surface, la membrane cloisonnée 23 étant légèrement en retrait par rapport aux grains 21 affleurant la surface du support poreux. Cette membrane 23 pénètre à l'intérieur du support poreux et son épaisseur $\underline{e}$ peut varier de quelques µm à 200 µm comme on l'a vu précédemment.

On remarque ainsi que dans cette structure, la membrane microporeuse en polymère organique 23 est cloisonnée et est bien ancrée dans le support poreux et qu'elle ne présente pas de points de fragilité. Par ailleurs, lors de la mise en place de cette membrane, le cloisonnement de celle-ci entre les grains 21 du support poreux permet d'éviter le développement de contraintes considérables dans la couche 23 lors des opérations de séchage et de coagulation et d'éviter ainsi les défauts de fissuration.

Sur la figure 5, on a représenté à titre comparatif la structure de l'élément obtenu selon le brevet japonais 50/206008. Dans ce cas, la membrane 23 est disposée sur la surface du support poreux au-dessus des grains 21 sans être imbriquée dans les pores de ce support. De ce fait, la membrane 23 présente des zones de fragilisation, notamment aux emplacements 25 qui correspondent aux pores du support poreux. De plus, lors de la fabrication de cette membrane, le développement de contraintes considérables dans celle-ci lors des opérations successives de séchage et de coagulation, engendre des défauts de fissuration.

Les éléments d'ultrafiltration de l'invention peuvent être utilisés pour la déminéralisation de l'eau du fait du caractère ionique du polymère utilisé. Dans ce cas, le taux de rejet de sels dépend à la fois :
- de la texture de l'élément,
- du degré de sulfonation de la polysulfone,
- de la valence du co-ion du soluté,
- du rayon de contre-ion, c'est-à-dire des effets d'interaction entre la membrane et le contre-ion, et
- de la concentration du soluté.

Dans le tableau 2 joint, on a regroupé les résultats obtenus en utilisant l'élément d'ultrafiltration de l'exemple 1 pour l'élimination d'ions $Na^+$ à diverses concentrations, sous la forme d'hydroxyde ou de chlorure en solution aqueuse à différents pH, en utilisant la technique d'ultrafiltration tangentielle.

Pour obtenir ces résultats, on a fait circuler la solution aqueuse contenant l'ion à éliminer à l'intérieur du tube formant l'élément d'ultrafiltration sous une pression de 0,3MPa (3 bars) et un débit de 500 l.h$^{-1}$. On a ainsi recueilli à l'extérieur du tube une solution déminéralisée et à la sortie du tube une solution enrichie en ion, le taux de rejet de l'ion (en %) étant défini par la formule suivante :

$$R\% = \frac{Co - Cp}{Co} \times 100$$

avec Cp représentant la concentration du perméat et Co la concentration de la solution mère.

Dans ce tableau, on a également donné les résultats obtenus en utilisant l'élément de l'exemple 8 pour éliminer des ions $Co^{2+}$, $Mn^{2+}$ et $Na^+$ présents simultanément dans une solution aqueuse.

Bien que l'on ait décrit ici l'utilisation des éléments pour la déminéralisation de l'eau, il est bien évident que les éléments de l'invention peuvent être utilisés dans d'autres processus de séparation et conjointement dans des opérations d'ultrafiltration et de déminéralisation, par exemple pour l'ultrafiltration des macromolécules avec des applications dans l'industrie agroalimentaire, pharmaceutique et chimique, ainsi que pour le traitement (déminéralisation et ultrafiltration) d'efffluents liquides radioactifs comprenant des ions tels que les ions de Co, Mn, Pb, Ag et/ou Cs, en faibles concentrations.

De même, on peut utiliser d'autres supports poreux que l'alumine et d'autres polymères organiques que la polysulfone sulfonée utilisée dans les exemples.

Tableau 1

| Ex. | Solution d'enduction | | | | Durée d'évapo-ration (en s) | Perméabilité à l'eau (en $m.d^{-1}.Pa^{-1}$) | $r_S$ (en nm) | | Disper-sion $r_{90}/r_{50}$ |
|---|---|---|---|---|---|---|---|---|---|
| | Polysulfone sulfonée (en g) | DMF (en $cm^3$) | Sulfolane (en $cm^3$) | eau (en %) | | | R=50% $r_{50}$ | R=90% $r_{90}$ | |
| 1 | 15 | 30 | 20 | — | 90 | $0,38.10^{-5}$ | 4,2 | 9,1 | 2,16 |
| 2 | 15 | 30 | 20 | — | 180 | $0,30.10^{-5}$ | 2,7 | 6,1 | 2,25 |
| 3 | 15 | 30 | 20 | — | 360 | $0,30.10^{-5}$ | 2,5 | 5,2 | 2,08 |
| 4 | 10 | 35 | 25 | — | 90 | $2,5.10^{-5}$ | 2,9 | 30,2 | 10,4 |
| 5 | 10 | 35 | 25 | 6,07 | 90 | $1,95.10^{-5}$ | 2,7 | 14,3 | 5,3 |
| 6 | 10 | 35 | 25 | 9,87 | 90 | $1,55.10^{-5}$ | 3,6 | 9,4 | 2,6 |
| 7 | 15 | 30 | 20 | 2,77 | 90 | $0,30.10^{-5}$ | 2,4 | 6,0 | 2,5 |
| 8 | 15 | 55 | — | — | 60 | $0,9.10^{-5}$ | — | — | — |

Tableau 2

| Elément | Ion à éliminer | | | pH | Taux de rejet (en %) |
|---|---|---|---|---|---|
| | Nature | Concentration (en ppm) | Sous forme | | |
| de l'ex. 1 | $Na^+$ | 7 | NaOH | 8,5 | 88,8 |
| de l'ex. 1 | $Na^+$ | 31 | NaCl | 8,5 | 68 |
| de l'ex. 1 | $Na^+$ | 230 | NaCl | 8,5 | 13 |
| de l'ex. 8 | $Co^{++}$ | 4 | $CoSO_4$ | 6,2 | 40 |
| | $Mn^{++}$ | 4 | $Mn(NO_3)_2$ | 6,2 | 35 |
| | $Na^+$ | 2–65 | NaCl | 6,2 | 15 |

## Revendications

1. Elément d'ultrafiltration ou d'hyperfiltration, caractérisé en ce qu'il comprend un support poreux en matériau inorganique et une membrane microporeuse en polymère organique, asymétrique, cloisonnée, réalisée sur l'une des surfaces du support poreux et imbriquée dans les pores du support poreux affleurant cette surface sans dépasser la surface du support poreux, cette membrane microporeuse ayant une épaisseur inférieure à celle du support poreux.

2. Elément selon la revendication 1, caractérisé en ce que les rayons des pores de la membrane microporeuse en polymère organique sont située dans la gamme allant de 1,5 à 100 nm.

3. Elément selon l'une quelconque des revendications 1 et 2, caratérisé en ce que l'épaisseur de la membrane est de 25 à 200 μm et l'épaisseur du support poreux de 1,5 à 4 mm.

4. Elément selon la revendication 1, caractérisé en ce que le matériau inorganique est un métal ou un alliage.

5. Elément selon la revendication 1, caractérisé en ce que le matériau inorganique est du carbone.

6. Elément selon la revendication 1, caractérisé en ce que le matériau inorganique est un matériau céramique choisi parmi les oxydes, les carbures, les nitrures et les siliciures.

7. Elément selon la revendication 6, caractérisé en ce que le matériau inorganique est l'alumine.

8. Elément selon l'une quelconque des revendications 1 à 3, caractérisé en ce que le polymère organique est choisi parmi les polysulfones, les polyamides, les esters cellulosiques et les éthers cellulosiques.

9. Elément selon l'une quelconque des revendications 1 à 3, caractérisé en ce que le polymère organique comprend des groupes cationiques et/ou anioniques.

10. Elément selon la revendication 9, caractérisé en ce que le polymère organique est une polysulfone sulfonée.

11. Elément selon l'une quelconque des revendications 1 à 7, caractérisé en ce que la surface du support poreux sur laquelle est réalisée la membrane de polymére organique comprend une couche mince d'apprêt dont les pores ont un rayon moyen de pore inférieur au rayon moyen de pore du reste du support poreux.

12. Elément selon la revendication 11, caractérisé en ce que la couche mince d'apprêt a un rayon moyen de pore de 0,01 à 10 m.

13. Elément selon l'une quelconque des revendications 1 à 12, caractérisé en ce que le support poreux est tubulaire.

14. Elément selon la revendication 13, caractérisé en ce que la membrane de polymère organique est réalisée sur la surface interne du support tubulaire.

15. Elèment selon l'une quelconque des revendications 1 à 12, caractérisé en ce que le support poreux est constitué par un module percé de canaux à l'intérieur desquels est réalisée la membrane de polymère organique.

16. Elément selon l'une quelconque des revendications 1 à 15, caractérisé en ce que le support poreux est muni de nervures pour promouvoir la turbulence du fluide à traiter au niveau de l'élément.

17. Procédé de fabrication d'un élément d'ultrafiltration ou d'hyperfiltration selon l'une quelconque des revendications 1 à 16, caractérisé en ce qu'il consiste à:

a) – enduire l'une des surfaces d'un support poreux en matériau inorganique d'une solution d'enduction constituée par une solution d'un polymère organique dans au moins un solvant, de façon à réaliser l'enduction à l'intérieur du support poreux sans former de film continu de solution d'enduction sur la surface du support poreux, et

b) – insolubiliser le polymère organique de la solution d'enduction en effectuant les étapes successives suivantes:

1) – évaporation partielle du ou des solvants de la solution d'enduction,

2) – coagulation du polymère par immersion du support enduit dans un bain de coagulation ne dissolvant pas ni le polymère ni le support poreux tout en étant miscible avec le ou les solvants de la solution d'enduction, et

3) – traitement thermique de l'ensemble dans un liquide ne dissolvant ni le polymère, ni le support poreux.

18. Utilisation de l'élément selon l'une quelconque des revendications 1 à 16, pour la déminéralisation et l'ultrafiltration d'effluents liquides radioactifs.

**Patentansprüche**

1. Ultrafiltrations- oder Hyperfiltrationselement, dadurch gekennzeichnet, daß es umfaßt einen porösen Träger aus einem anorganischen Material und eine asymmetrische mikroporöse Zwischenwand-Membran aus einem organischen Polymeren, die auf eine der Oberflächen des porösen Trägers aufgebracht ist und dachziegelartig über den Poren des porösen Trägers liegt, so daß sie diese Oberfläche eben macht, eine über die Oberfläche des porösen Trägers hinauszuragen, wobei diese mikroporöse Membran eine Dicke hat, die geringer ist als diejenige des porösen Trägers.

2. Element nach Anspruch 1, dadurch gekennzeichnet, daß die Porenradien der mikroporösen Membran aus einem organischen Polymeren in dem von 1,5 bis 100 nm gehenden Bereich liegen.

3. Element nach einem der Ansprüche 1 und 2, dadurch gekennzeichnet, daß die Dicke der Membran 25 bis 200 µm beträgt und daß die Dicke des porösen Trägers 1,5 bis 5 mm beträgt.

4. Element nach Anspruch 1, dadurch gekennzeichnet, daß das anorganische Material ein Metall oder eine Legierung ist.

5. Element nach Anspruch 1, dadurch gekennzeichnet, daß das anorganische Material Kohlenstoff ist.

6. Element nach Anspruch 1, dadurch gekennzeichnet, daß das anorganische Material ein Keramikmaterial ist, ausgewählt aus Oxiden, Carbiden, Nitriden und Siliciden.

7. Element nach Anspruch 6, dadurch gekennzeichnet, daß das anorganische Material Aluminiumoxid ist.

8. Element nach einem der Ansprüche 1 bis 3, dadurch gekennzeichnet, daß das organische Polymere ausgewählt wird aus Polysulfonen, Polyamiden, Celluloseestern und Celluloseäthern.

9. Element nach einem der Ansprüche 1 bis 3, dadurch gekennzeichnet, daß das organische Polymere kationische und/oder anionische Gruppen umfaßt.

10. Element nach Anspruch 9, dadurch gekennzeichnet, daß das organische Polymere ein sulfoniertes Polysulfon ist.

11. Element nach einem der Ansprüche 1 bis 7, dadurch gekennzeichnet, daß die Oberfläche des porösen Trägers, auf der die Membran aus einem organischen Polymeren angeordnet ist, eine dünne Appreturschicht umfaßt, deren Poren einen mittleren Porenradius haben, der geringer ist als der mittlere Porenradius des Restes des porösen Trägers.

12. Element nach Anspruch 11, dadurch gekennzeichnet, daß die dünne Appreturschicht einen mittleren Porenradius von 0,01 bis 10 µm hat.

13. Element nach einem der Ansprüche 1 bis 12, dadurch gekennzeichnet, daß der poröse Träger schlauchartig ist.

14. Element nach Anspruch 13, dadurch gekennzeichnet, daß die Membran aus dem organischen Polymeren auf der inneren Oberfläche des schlauchförmigen Trägers angeordnet ist.

15. Element nach einem der Ansprüche 1 bis 12, dadurch gekennzeichnet, daß der poröse Träger aus einem Modul besteht, der von Kanälen durchbohrt ist, in deren Innenraum die Membran aus dem organischen Polymeren angeordnet ist.

16. Element nach einem der Ansprüche 1 bis 15, dadurch gekennzeichnet, daß der poröse Träger mit Rippen ausgestattet ist, um die Turbulenz des zu behandelnden Fluids auf dem Element zu fördern.

17. Verfahren zur Herstellung eines Ultrafiltrations- oder Hyperfiltrationselements nach einem der Ansprüche 1 bis 16, dadurch gekennzeichnet, daß es darin besteht, daß man

(a) eine der Oberflächen eines porösen Trägers aus einem anorganischen Material mit einer Überzugslösung, die aus einer Lösung eines organischen Polymers in mindestens einem Lösungsmittel besteht, in der Weise beschichtet, daß sie auf das Innere des porösen Trägers aufgebracht wird, ohne einen kontinuierlichen Film aus der Beschichtungslösung auf der Oberfläche des porösen Trägers zu bilden, und

(b) das organische Polymere der Beschichtungslösung insolubilisiert wird durch Durchführung der folgenden aufeinanderfolgenden Stufen:

1) partielle Verdampfung des oder der Lösungsmittel der Beschichtungslösung,

2) Coagulation des Polymeren durch Eintauchen des beschichteten Trägers in ein Coagulationsbad, das weder das Polymere noch den porösen Träger auflöst, jedoch mit dem oder den Lösungsmitteln der Beschichtungslösung mischbar ist, und

3) thermische Behandlung des Ganzen in einer Flüssigkeit, die weder das Polymere noch den porösen Träger auflöst.

18. Verwendung des Elements nach einem der Ansprüche 1 bis 16 für die Demineralisierung und Ultrafiltration von radioaktiven flüssigen Abströmen.

## Claims

1. Ultrafiltration or hyperfiltration element, characterized in that it comprises a porous inorganic material support and a cellular, asymmetrical, microporous organic polymer membrane produced on one of the surfaces of the porous support and fitted into the pores of the porous support flush with said surface and without projecting beyond the porous support surface, said microporous membrane having a thickness less than that of the porous support.

2. Element according to claim 1, characterized in that the radii of the pore of the microporous organic polymer membrane are in the range 1.5 – 100 nm.

3. Element according to claim 1 and 2, characterized in that the membrane thickness is 25–200 µm and the porous support thickness 1.5–5 mm.

4. Element according to claim 1, characterized in that the inorganic material is a metal or an alloy.

5. Element according to claim 1, characterized in that the inorganic material is carbon.

6. Element according to claim 1, characterized in that the inorganic material is a ceramic material chosen from among oxides, carbides, nitrides and silicides.

7. Element according to claim 6, characterized in that the inorganic material is alumina.

8. Element according to any one of the claims 1 to 3, characterized in that the organic polymer is chosen from among polysulphones, polyamides, cellulose esters and cellulose ethers.

9. Element according to any one of the claims 1 to 3, characterized in that the organic polymer comprises cationic and/or anionic groups.

10. Element according to claim 9, characterized in that the organic polymer is a sulphonated polysulphone.

11. Element according to any one of the claims 1 to 7, characterized in that the surface of the porous support on which is produced the organic polymer membrane comprises a thin finishing coating, whose pores have a mean pore radius smaller than the mean pore radius of the remainder of the porous support.

12. Element according to claim 11, characterized in that the thin finishing coating has a mean pore radius of 0.01–10 µm.

13. Element according to any of the claims 1 to 12, characterized in that the porous support is tubular.

14. Element according to claim 13, characterized in that the organic polymer membrane is produced on the inner surface of the tubular support.

15. Element according to any one of the claims 1 to 12, characterized in that the porous support is constituted by a module perforated by channels, within which is produced the organic polymer membrane.

16. Element according to any one of the claims 1 to 15, characterized in that the porous support is provided with ribs for promoting turbulence of the fluid to be treated at the element.

17. Process for producing an ultrafiltration or hyperfiltration element according to any one of the claims 1 to 16, characterized in that it comprises:

a) coating one of the surfaces of a porous inorganic material support with a coating solution constituted by a solution of the organic polymer in at least one solvent and

b) insolubilizing the organic polymer of the coating solution by performing the following successive stages:

1) partial evaporation of the solvent or solvents of the coating solution,

2) coagulation of the polymer by immersing the coated support in a coagulation bath dissolving neither the polymer nor the porous support, but whilst being miscible with the solvent or solvents of the coating solution and

3) heat treatment of the assembly in a liquid dissolving neither the polymer, nor the porous support.

18. Use of an element according to any one of the claims 1 to 16 for the demineralization and ultrafiltration of radioactive liquid effluents.

FIG. 1    FIG. 2    FIG. 3

FIG. 4

FIG. 5